Europäisches Patentamt

(19) **European Patent Office**

**Office européen des brevets**

(11) Numéro de publication: **0 192 577**

**A1**

(12) # DEMANDE DE BREVET EUROPEEN

(21) Numéro de dépôt: **86400348.8**

(22) Date de dépôt: **19.02.86**

(51) Int. Cl.⁴: **A 01 K 63/00**

(30) Priorité: **19.02.85 FR 8502354**

(43) Date de publication de la demande:
**27.08.86 Bulletin 86/35**

(84) Etats contractants désignés:
**AT BE CH DE FR GB IT LI NL SE**

(71) Demandeur: **Yardin, Pierre**
**15 rue de la Borie**
**F-87100 Limoges(FR)**

(72) Inventeur: **Yardin, Pierre**
**15 rue de la Borie**
**F-87100 Limoges(FR)**

(74) Mandataire: **Pinguet, André**
**CAPRI 28 bis, avenue Mozart**
**F-75016 Paris(FR)**

(54) **Conteneur portatif pour le transport et la conservation de poissons vivants.**

(57) Le conteneur comporte essentiellement un bac (1) pour contenir de l'eau, un réservoir (3) à air comprimé, de volume fixe, pour l'oxygénation de l'eau dudit bac et une pompe manuelle (4), du type à bicyclette, pour remplir d'air comprimé à une pression comprise entre 2 et 3 bars ledit réservoir. Le conteneur peut comporter en outre un compartiment (12) à glace. Le bac (1), le réservoir (3), le compartiment (12) et éventuellement la pompe (4) sont logés dans un coffret (15), mini d'un couvercle (2), assurant une isolation thermique. Avantageusement le réservoir (3) est constitué par un tuyau souple fermé à ses deux extrémités.

Le conteneur selon l'invention ne nécessite, pour être opérationnel, qu'un peu d'énergie musculaire de la part de l'utilisateur et a une autonomie de fonctionnement de plusieurs heures.

*Fig. 2*

EP 0 192 577 A1

La présente invention a pour objet un conteneur portatif pour le transport et la conservation de poissons vivants.

Lorsqu'on veut conserver vivants des poissons dans un récipient contenant de l'eau stagnante, qu'elle soit douce ou salée selon qu'il s'agit de poissons de rivière ou de mer, il est nécessaire d'oxygéner cette eau régulièrement pour prévenir l'asphyxie des poissons. C'est ainsi qu'on place dans les aquariums un dispositif d'oxygénation de l'eau comportant une pompe à air reliée à un diffuseur et entraînée par un petit moteur électrique alimenté par le secteur, en général par l'intermédiaire d'un transformateur.

Un problème particulier se pose lorsqu'on conçoit un récipient destiné non à être installé à poste fixe dans un local, comme un aquarium, mais à servir au transport de poissons vivants qu'on souhaite conserver tels : il faut alors prévoir une source d'énergie autonome pour alimenter l'indispensable dispositif d'oxygénation de l'eau.

Une solution consiste, lorsqu'on a doté le récipient d'un dispositif d'oxygénation comportant une pompe à air électrique, à adjoindre audit récipient une batterie de piles, éventuellement rechargeables. Cependant, en dépit de sa facilité de réalisation et de l'autonomie de fonctionnement qu'elle garantit, cette solution présente des inconvénients, tant au point de vue du coût d'exploitation et de la fiabilité (piles se déchargeant en cours d'utilisation) qu'au point de vue du poids, ce dernier n'étant pas le moins important puisqu'un tel récipient est destiné essentiellement à l'usage des pêcheurs et doit donc être portatif.

Une autre solution, décrite dans le brevet américain 3 407 529, consiste à adjoindre à un récipient destiné à contenir de l'eau, une capacité gonflable reliée par des canalisations souples d'une part à un diffuseur disposé au fond dudit récipient et d'autre part à un organe de saisie buccale ou à un soufflet pouvant être actionné, par exemple, par les mouvements thoraciques respiratoires de la personne qui porte ledit récipient. Dans ce dispositif, qui présente l'avantage d'être à la fois léger et peu coûteux à mettre en oeuvre, c'est l'énergie musculaire du porteur du récipient qui est à la source du processus d'oxygénation de l'eau. La capacité gonflable, qu'elle soit gonflée par insufflation directe ou par l'intermédiaire d'un soufflet, ne constitue cependant qu'un tampon entre le diffuseur et l'activité musculaire du porteur. Aussi ce dispositif d'oxygénation n'a-t-il aucune autonomie par rapport au porteur, lequel ne peut se séparer de son récipient sous peine d'interrompre l'oxygénation de l'eau.

L'objet de la présente invention est un conteneur portatif pour le transport et la conservation des poissons vivants présentant les avantages des deux dispositifs décrits ci-dessus sans en comporter les inconvénients: légéreté, autonomie de fonctionnement par rapport à l'utilisateur, exploitation ne mettant en jeu que l'énergie musculaire de l'utilisateur, c'est à dire de coût nul.

Le conteneur comporte essentiellement un bac pour contenir de l'eau, un réservoir à air comprimé, de volume fixe pour l'oxygénation de l'eau dudit bac et un pompe manuelle, avantageusement du type pompe à bicyclette, pour remplir d'air comprimé à une pression comprise entre deux et trois bars ledit réservoir. Le conteneur peut porter en outre un compartiment à glace. Le bac, le réservoir, le compartiment et éventuellement la pompe sont logés dans un coffret, muni d'un couvercle, assurant une isolation thermique. Dans un mode de réalisation particulier, le réservoir est constitué par un tuyau souple fermé à ses deux extrémités.

D'autres caractéristiques et avantages de la présente invention apparaîtront mieux à la lecture de la description qui va suivre, faite en relation avec les dessins annexés sur lesquels:

La figure 1 est un schéma de fonctionnement du conteneur selon l'invention;

La figure 2 est une vue en perspective, comportant un arraché, d'un premier mode de réalisation de l'invention; et

La figure 3 est une vue en coupe schématique passant par l'axe longitudinal d'un second mode de réalisation de l'invention.`

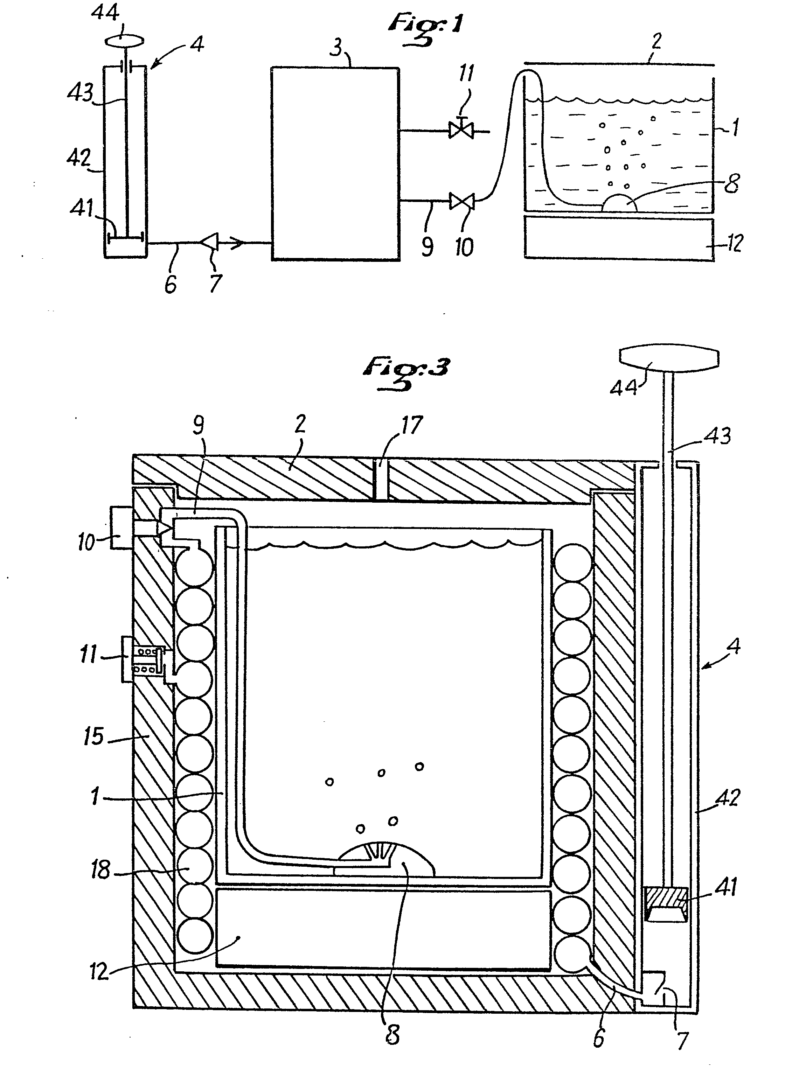

Le schéma de la figure 1 représente les éléments essentiels d'un conteneur selon l'invention. Ce conteneur comporte un bac 1 pour contenir de l'eau comprenant un orifice à sa partie supérieure pour l'introduction des poissons et un couvercle 2; un réservoir 3 de volume fixe pour contenir de l'air comprimé à deux ou trois bars; une pompe 4, du type pompe à bicyclette, comprenant essentiellement un piston 41 coulissant dans un cylindre 42 et une tige 43 reliant le piston 41 à une poignée d'actionnement 44. L'extrémité inférieure du cylindre 42 est reliée au réservoir 3 par une canalisation 6 sur laquelle est disposée un clapet de non-retour 7. Le réservoir 3 est également relié à un diffuseur 8 placé au fond du bac 1 par une canalisation 9 sur laquelle est disposée une vanne 10 de régulation de débit. Eventuellement le réservoir 3 peut être relié aussi à une soupape 11 tarée à la pression maximale admissible et/ou à un manomètre (non représenté). Outre les éléments énumérés ci-dessus, le conteneur comporte un compartiment 12 pour contenir de la glace, le cas échéant. Avantageusement tous ces éléments sont disposés de façon à avoir un encombrement minimal, comme on le verra de façon précise dans la description des deux modes de réalisation qui sera faite plus loin, et on prévoit d'entourer l'ensemble formé par le bac 1 et le compartiment 12 d'une enveloppe thermique isolante. Le fonctionnement du conteneur selon l'invention est le suivant : après avoir fermé la vanne 10, l'utilisateur actionne la pompe 4 et gonfle le réservoir 3 à trois bars, par exemple. Il ouvre ensuite la vanne 10 et règle le débit de sortie de l'air à un niveau convenable. Suivant le volume du réservoir 3, la pression de l'air comprimé et le débit choisi, l'oxygénation de l'eau contenue dans le bac 1 peut s'effectuer pendant plusieurs heures. Par exemple avec un réservoir 3 d'une contenance de deux litres, rempli initialement d'air comprimé à deux bars, pour un débit de sortie d'air de 1 litre/heure, l'oxygénation se produira théoriquement pendant quatre heures.

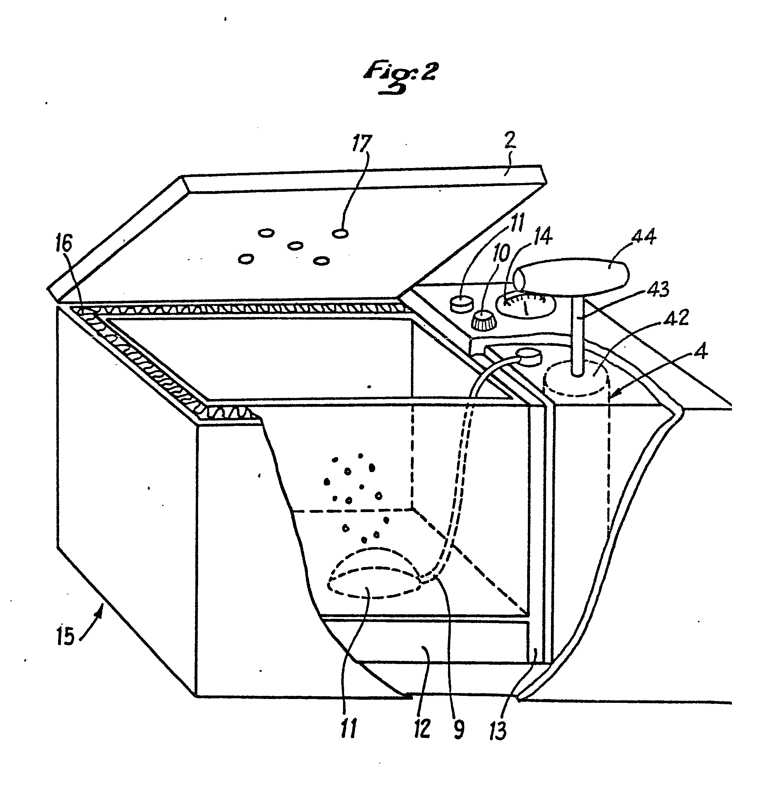

Sur la figure 2, on a représenté un premier mode de réalisation de l'invention, de forme générale parallélépipèdique rectangle. On reconnaît le bac 1 sous lequel on a placé le compartiment 12 ; le réservoir 3 disposé latéralement aux précédents et séparés d'eux par une paroi isolante 13; la pompe 4 dont le cylindre 42 est logé à l'intérieur du réservoir 3 et dont la poignée d'actionnement 44 peut être avantageusement escamotable ; le diffuseur 8, la canalisation 9 , le clapet de non-retour 7, la vanne 10, la soupape 11 ainsi qu'un manomètre 14. L'ensemble est placé dans un coffret 15 dont les parois, au moins celles qui se trouvent en vis-à-vis de l'ensemble bac 1-compartiment 12, sont revêtues d'un matériau isolant 16. Le coffret 15 comporte un couvercle 2 amovible pour fermer le bac 1. Ce couvercle est également revêtu de matériau isolant et comporte quelques trous 17.

Avantageusement tous les éléments du conteneur selon l'invention peuvent être désolidarisés facilement. Le bac 1 et le compartiment 12 notamment doivent pouvoir être sortis du coffret 15 . Ces différents éléments sont réalisés dans des matériaux légers, résistants et facilement manufacturables, connus en soi, en particulier des matières plastiques. Ainsi le bac 11 et le réservoir 3 peuvent être obtenus par moulage. Quant au matériau isolant 16 constituant l'enveloppe d'isolation thermique du bac 1 et du compartiment à glace 12, ce peut être du polystyrène expansé. Cette isolation peut être également réalisée avec de la laine de verre ou tout autre matériau équivalent.

La figure 3 représente schématiquement un autre mode de réalisation de l'invention, de forme générale cylindrique ou tronconique. Dans ce mode de réalisation le coffret 15, revêtu d'un matériau 16 thermiquement isolant (ou incluant un tel matériau), est concentrique au bac 1 et au compartiment à glace 12, lesquels sont superposés, par exemple. Le réservoir 3 peut avoir la forme d'une couronne cylindrique logée entre le bac 1 et le coffret 15 et concentrique au bac 1. Avantageusement il est constitué d'un tuyau 18 souple, fermé à ses deux extrémités et lové en spirale autour du bac 1 et du compartiment 12. L'utilisation d'un tuyau pour réaliser le réservoir 3 présente deux avantages considérables. D'une part, ce mode de réalisation ne présente aucune difficulté de fabrication, contrairement à ceux qui ont été mentionnés plus haut, savoir un volume parallélépipèdique rectangle comportant un logement pour la pompe 4 ( cas de la figure 2) ou un volume constitué par une couronne cylindrique. Pour un même volume intérieur et soumis à une même pression, un tuyau et un réservoir faits d'une quantité de matériau équivalente, réagissent très différemment à la pression, le premier ne comportant pratiquement pas de zone de faiblesse au contraire du second ( arêtes, etc) .Comme autre avantage, le tuyau présente celui de pouvoir être logé dans des volumes de formes compliquées, ce qui permet de réaliser un conteneur très compact. C'est ainsi que dans un mode de réalisation avantageux du conteneur représenté sur la figure 2, le réservoir 3 de volume approximativement parallélépipèdique (au logement de la pompe 4 près) peut être remplacé par un tube de volume intérieur équivalent.

0192577

Outre le bac 1, le réservoir 3 et le coffret 15 on reconnaît, sur le mode de réalisation représenté sur la figure 3, le couvercle 2, la pompe 4 fixée, par exemple, à la périphérie du coffret 15, le clapet de non-retour 7, la soupape 11, la canalisation 9 reliant le réservoir 3 au diffuseur 8 et sur laquelle est disposée la vanne 10.

Les remarques faites à propos des matériaux utilisés pour fabriquer le conteneur représenté sur la figure 2 valent pour celui qui est représenté sur la figure 3;

La présente invention n'est pas limitée aux exemples de réalisation qui viennent d'être décrits; elle est au contraire susceptible de modifications et de variantes qui apparaîtront à l'homme de l'art.

0192577

REVENDICATION

1. Conteneur portatif pour le transport et la conservation de poissons vivants comportant un bac ( 1 ) pour contenir de l'eau, caractérisé en ce qu'il comporte en outre un réservoir ( 3 ) à air comprimé de volume fixe pour l'oxygénation de l'eau dudit bac et une pompe manuelle ( 4 ), du type pompe à bicyclette, pour remplir d'air comprimé ledit réservoir.

2. Conteneur selon la revendication 1, caractérisé en ce que le réservoir ( 3 ) est relié à un diffuseur ( 8 ) située au fond du bac ( 1 ) par une canalisation ( 9 ) sur laquelle est disposée une vanne ( 10 ) de régularisation de débit.

3. Conteneur selon la revendication 1 ou 2 , caractérisé en ce que la pompe ( 4 ) est incluse dans le réservoir ( 3 ).

4. Conteneur selon la revendication 1 ou 2, caractérisé en ce que le réservoir ( 3 ) est constitué par un tuyau ( 18 ) souple fermé à ses deux extrémités.

5. Conteneur selon une des revendications précédentes, caractérisé en ce que le réservoir ( 3 ) est rempli d'air comprimé à une pression comprise entre deux et trois bars.

6. Conteneur selon une des revendications précédentes, caractérisé en ce qu'il comporte en outre un compartiment ( 12 ) pour contenir de la glace.

7. Conteneur selon une des revendications précédentes, où le bac ( 1 ),le réservoir ( 3 ), le compartiment ( 12 ) et éventuellement la pompe( 4 ) sont disposés dans un coffret ( 15 ) muni d'un couvercle ( 2 ), caractérisé en ce que le coffret ( 15 ) est revêtu d'un matériau ( 16 ) thermiquement isolant.

8. Conteneur selon la revendication 1, caractérisé en ce qu'il est de forme générale tronconique et en ce que le coffret ( 15 ) et le bac ( 1 ) sont concentriques, le réservoir ( 3 ) étant fait d'un tuyau ( 18 ) lové en spirale autour du bac ( 1 ).

9. Conteneur selon la revendication 1 ,caractérisé en ce qu'il est de forme générale cylindrique et en ce que le coffret ( 15 ) et le bac ( 1 ) sont concentriques, le réservoir ( 3 ) étant fait d'un tuyau ( 18 ) lové en spirale autour du bac ( 1 )

Fig:1

Fig:3

1/2    0192577

Fig:2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 407 529 (KELLNER)<br>* Figures 1-4; colonne 1, ligne 66 - colonne 2, ligne 6; colonne 3, lignes 7-51 * | 1 | A 01 K 63/00 |
| A |  | 2 | |
|  | --- | | |
| Y | CH-A- 58 582 (WEBER-STIERLIN)<br>* En entier * | 1 | |
|  | --- | | |
| A | FR-A- 713 992 (PORTALIER)<br>* Figures 1,3,4; page 1, ligne 61 - page 2, ligne 25 * | 6 | |
|  | ----- | | |

|  | DOMAINES TECHNIQUES RECHERCHES (Int. Cl.4) |
|---|---|
|  | A 01 K |

Le présent rapport de recherche a été établi pour toutes les revendications

| Lieu de la recherche | Date d'achèvement de la recherche | Examinateur |
|---|---|---|
| LA HAYE | 23-05-1986 | VILBIG K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82